# FASCICULE DE BREVET EUROPEEN

(11) **EP 1 429 866 B1**
(45) Date de publication et mention de la délivrance du brevet: **03.06.2009**
(21) Numéro de dépôt: 02777429.8
(22) Date de dépôt: 12.09.2002
(51) Int. Cl.: B01L 3/02, G01N 1/40

(54) **PROCEDE ET DISPOSITIF D'ISOLEMENT ET/OU DETERMINATION D'UN ANALYTE**
VERFAHREN UND VORRICHTUNG ZUR ISOLIERUNG UND/ODER BESTIMMUNG EINES ANALYTEN
METHOD AND DEVICE FOR ISOLATING AND/OR DETERMINING AN ANALYTE

(30) Priorité: 12.09.2001 FR 0111883
(43) Date de publication de la demande: 23.06.2004
(73) Titulaire: BIOMERIEUX, 69280 Marcy-L'Etoile (FR); COMMISSARIAT A L'ENERGIE ATOMIQUE, 75015 Paris (FR)
(72) Inventeur: GINOT, Frédéric, F-38120 Saint Egrève (FR); ACHARD, Jean-Luc, F-38100 Grenoble (FR); DRAZEK, Laurent, F-45100 Orleans (FR); PHAM, Pascale, F-38920 Crolle (FR)
(74) Mandataire: Guerre, Dominique
(86) Numéro de dépôt international: PCT/FR2002/003113
(87) Numéro de publication internationale: WO 2003/022436

(56) Documents cités:
- EP-A- 0 364 203
- WO-A-99/54730
- WO-A-99/62622
- US-A- 5 658 723
- LIU H ET AL: "ANALYTICAL CHEMISTRY IN A DROP. SOLVENT EXTRACTION IN A MICRODROP" ANALYTICAL CHEMISTRY, AMERICAN CHEMICAL SOCIETY. COLUMBUS, US, vol. 68, no. 11, 1 juin 1996 (1996-06-01), pages 1817-1821, XP000594175 ISSN: 0003-2700

## Description

La présente invention concerne, de manière générale, l'isolement d'un analyte.

Par "isoler" ou "isolement", on entend de manière générique toute technique permettant de séparer un analyte, mais aussi d'enrichir ou concentrer en ledit analyte tout liquide le contenant, ou tout support solide en contact avec ce liquide. Mais on entend aussi, éventuellement conjointement avec la définition précédente, toute technique permettant de déterminer l'analyte, au sens d'une détection et/ou quantification de celui-ci, à partir du milieu liquide le contenant.

Par "analyte", on entend toute entité, notamment entité chimique, biochimique, ou biologique, à isoler. Au rang des analytes considérés ci-après par la présente invention, on citera les cellules, organelles, virus et bactéries, les anticorps, les fragments d'anticorps, les antigènes, les haptènes, les lectines, les sucres, les acides nucléiques, les protéines, notamment A ou G, les hormones, les récepteurs d'hormones, la biotine, l'avidine, la streptavidine, et d'une manière générale toutes molécules ou macromolécules, naturelles ou synthétiques, ou analogues, à déterminer, c'est-à-dire à détecter et/ou à quantifier.

Plus particulièrement, la présente invention sera introduite et discutée par référence aux analyses biologiques, notamment moléculaires, pour lesquelles l'échantillon liquide de départ comprend ou contient un analyte du type macromolécule biologique, telle que protéine ou acide nucléique.

Différents formats d'essais biologiques de type hétérogène, tels que ceux dits ELISA, comportent une étape, dite d'incubation, au cours de laquelle un milieu liquide intermédiaire, dans lequel se trouve distribué l'analyte obtenu à partir de l'échantillon de départ, est mis en contact avec une surface réactive, c'est-à-dire une surface obtenue à partir d'un substrat et d'un réactif de liaison spécifique avec l'analyte, distribué et fixé sur ladite surface.

La performance d'une telle étape, ayant pour objet de capturer l'analyte, détermine celle du procédé d'analyse mis en oeuvre, en termes de spécificité, sensibilité, précision, ou rapidité.

Cette performance dépend quant à elle d'un certain nombre de facteurs qu'il convient d'examiner, pour bien comprendre les limites des méthodes d'analyse mises en oeuvre aujourd'hui dans le domaine de la biologie moléculaire (analyse d'acides nucléiques par exemple) et des immunodosages.

Un facteur a trait à l'exposition effective de la surface active à tout l'analyte distribué dans le milieu liquide. En pratique, la seule diffusion moléculaire (par agitation thermique) est insuffisante pour amener vers la surface réactive les molécules d'analyte qui sont séparées de ladite surface par une distance supérieure à quelques centaines de microns. En conséquence, par simple diffusion, seule une quantité limitée de l'analyte atteint la surface réactive.

Différentes solutions ont été proposées pour contrecarrer les limites de toute la diffusion moléculaire :
a) il a été proposé d'agiter le milieu liquide, au contact de la surface réactive ; une telle solution ne fonctionne plus dès que le volume du milieu liquide est relativement faible ou le puits trop profond, comme c'est le cas avec les puits d'une plaque de micro-titration à 384 puits ou plus, dont le volume élémentaire peut ne pas excéder 200 µl par puits,
b) il a aussi été proposé de créer un écoulement du milieu liquide, en général de manière laminaire, au contact de la surface réactive. Cette solution impose de mettre en oeuvre une pompe mécanique, et de mettre en mouvement des volumes relativement importants, ce qui diminue la vitesse de liaison spécifique entre la surface réactive et l'analyte,
c) il a aussi été proposé de diminuer la quantité du milieu liquide, mettant en oeuvre un réactif intermédiaire, à l'état divisé, par exemple des particules magnétiques comprenant un support magnétique et un agent de capture de l'analyte, lié audit support. Ce réactif intermédiaire permet de capturer l'analyte, et peut être ensuite confiné grâce à un champ magnétique. Ce confinement permet de soutirer le milieu liquide excédentaire sans prélever l'analyte. Puis, par destruction, par exemple par la chaleur, de la liaison entre le réactif intermédiaire et l'analyte, on libère ce dernier dans un volume du milieu liquide beaucoup plus faible.
   Cette solution a l'inconvénient de requérir un réactif supplémentaire et plusieurs étapes opératoires additionnelles.
d) il a été également proposé de diviser et distribuer la surface réactive au sein du milieu liquide, grâce à un support magnétique, divisé sous forme de particules, et fonctionnalisé avec le réactif de liaison spécifique avec l'analyte. Ces particules ont une taille comprise entre 50 nm et plusieurs microns. Ces particules ayant réagi avec l'analyte peuvent être ensuite séparées par confinement magnétique comme précédemment.

Cette solution présente l'avantage d'augmenter l'aire requise pour la capture de l'analyte, du fait que le réactif de liaison spécifique est présent partout ou presque. Or, le problème surgit pendant le déroulement du test, lors de la révélation de l'analyte par un réactif de détection. Ce réactif de détection va également se fixer, à niveau faible mais non nul sur l'aire réactive, indépendamment de la présence ou non de l'analyte. Une quantité de réactif de détection proportionnelle à l'aire réactive, non spécifiquement liée à l'analyte, va générer un bruit de fond, ce qui diminue la sensibilité de l'étape d'incubation, et donc celle de la méthode d'analyse.

Un autre facteur a trait précisément à l'importance des surfaces, non réactives (car non fonctionnalisées avec le réactif de liaison spécifique), mise en contact avec l'analyte. De manière générale, ces surfaces retiennent une partie de l'analyte, par absorption par exemple, ce qui bien entendu diminue la quantité d'analyte effectivement capturée par la surface réactive proprement dite, et donc limite la sensibilité de l'étape d'incubation, et donc de la méthode d'analyse.

Il y a donc intérêt à limiter l'importance des surfaces au contact du milieu liquide, autres que la surface réactive proprement dite.

La présente invention a pour objet un procédé permettant d'accélérer la cinétique de mise en contact de l'analyte sur la surface réactive.

La solution selon l'invention rompt avec les méthodes traditionnelles d'analyse, en particulier d'analyse biologique, en proposant un procédé, notamment d'incubation, consistant au moins à :
1) former et/ou maintenir, pendant la durée de ladite étape, une entité volumique réactionnelle ayant une forme symétrique autour d'un axe de référence, constituée uniquement par un milieu liquide dit interne, dans lequel est distribué l'analyte obtenu à partir de tout ou partie de l'échantillon liquide de départ, ladite entité réactionnelle présentant une interface avec un milieu externe, éventuellement confiné, différent du milieu interne, présentant avec ce dernier une tension superficielle, ladite interface ayant une surface développée fermée autour dudit axe de référence,
2) générer un gradient thermique selon l'axe de référence, au travers de l'entité réactionnelle, en sorte de déterminer dans cette dernière une zone chaude et une zone froide, induire une variation de la tension superficielle de l'interface, parallèlement à l'axe de référence, et mettre en mouvement le milieu interne selon un trajet fermé de micro-convection forcée, comprenant une circulation axiale aller de la zone froide à la zone chaude, et une circulation périphérique retour de la zone chaude à la zone froide,
3) placer la surface réactive au contact du milieu interne de l'entité réactionnelle, sur le trajet de micro-convection forcée dudit milieu interne.

Grâce à l'invention, il n'existe pratiquement au sein du milieu liquide aucun volume mort, et la quasi-totalité du liquide constituant le milieu interne se trouve amenée au contact de la surface active.

La solution selon l'invention permet donc d'augmenter directement la sensibilité du procédé de détermination de l'analyte, et ainsi d'améliorer encore le rendement de techniques telles que l'amplification s'agissant d'un analyte du type acide nucléique.

Préférentiellement, le réactif de liaison spécifique est un ligand.

On entend par "ligand", un élément capable de former, par un lien physique, un complexe avec l'analyte.

A titre d'exemple de ligand, on peut citer les anticorps, les fragments d'anticorps, les antigènes, les haptènes, les lectines, les sucres, les acides nucléiques, les protéines notamment A ou G, les hormones, les récepteurs d'hormones, la biotine, l'avidine ou la streptavidine, et d'une manière générale, les ligands naturels ou synthétiques, et les analogues de ligands modifiés, pouvant entrer en compétition avec les ligands.

Tout ligand tel que précédemment défini est immobilisé sur un support par un moyen quelconque tel qu'adsorption, covalence, chélation, reconnaissance moléculaire, et capable de retenir l'analyte, seul ou conjugué à un autre ligand.

On entend par "support" tout type de support, polymère, inorganique ou métallique. A titre d'exemple de supports polymères, on peut citer les supports plastiques à base de polystyrène, poly(méth)acrylates, polybutadiènes, polypropylène, ou d'autres, seuls ou sous forme de copolymères. A titre d'exemple de supports inorganiques, on peut citer l'oxyde de silicium, le silicium, le mica, le verre, le quartz, l'oxyde de titane, l'oxyde de vanadium. A titre d'exemple de supports métalliques, on peut citer l'or, l'argent.

L'immobilisation des ligands sur le support peut s'effectuer, soit par simple adsorption sur le support natif ou modifié, soit par l'intermédiaire d'une réaction chimique de fonctionnalisation, ou physique, permettant de modifier la surface du support, et ainsi de permettre la fixation du récepteur par des liens de covalence, ou d'autres moyens traditionnels bien connus de l'homme de l'art.

Dans la description ci-après, on entend par "particule" toute particule d'un support polymère, inorganique ou métallique, sur laquelle il est possible de greffer un ligand. En particulier, sont considérées comme tombant dans le champ de la présente invention, les particules pouvant être séparées par l'action d'un moyen physique extérieur, par exemple par voie magnétique ou électrique, ou sous l'effet de la gravité ou par centrifugation. Ressortent de la définition précédente, les particules de faible taille, notamment superparamagnétiques, dont la vitesse de sédimentation sous l'effet de la gravité est inférieure à l'agitation thermique, mais pouvant constituer des agrégats par tout procédé permettant de les réunir entre elles, ou de les assembler sur des particules de plus grosses tailles, séparables par un moyen physique quelconque.

A titre d'exemple de particules polymères, on peut citer les particules obtenues par polymérisation en émulsion telles que les latex, ou des particules de plus grosse taille, magnétiques ou non.

A titre d'exemple de particules métalliques, on peut citer l'or colloïdal, les particules ferro-, ferri-, para- ou superparamagnétiques, recouvertes ou non de polymères naturels ou synthétiques, dont la composition comprend le fer ou d'autres métaux comme le cobalt, le nickel, seuls ou sous forme d'alliages, magnétiques ou non.

A titre d'exemple de particules inorganiques, on peut citer les particules à base de silice ou de silicium, magnétiques ou non.

On entend par "détermination", toute méthode permettant de mettre en évidence la présence et/ou de quantifier l'analyte lié à la surfaces réactive.

A titre d'exemple de méthode de détermination, on peut citer toutes méthodes traditionnelles, à l'aide d'un marqueur par exemple, notamment par fluorescence, et d'une manière générale, toutes techniques non citées ici, mais équivalentes, par exemple colorimétriques, enzymatiques ou chronogéniques.

La présente invention est maintenant décrite par référence au dessin annexé dans lequel :
- la Figure 1 représente, à échelle agrandie, et de manière schématique, un dispositif conforme à la présente invention; les Figures 2 et 3 représentent une vue en coupe du dispositif selon Figure 1, respectivement selon coupes II-II et III-III ; c'est à partir de ces Figures 1 à 3 que sera explicité le procédé selon l'invention, et ses principes,
- les Figures 2, 4 d'une part, et 5 et 6 d'autre part, représentent respectivement deux autres modes d'exécution d'un dispositif selon l'invention, toujours de manière schématique ; le détail représenté ou schématisé par la Figure 6 met en évidence une particule ou microparticule, telle que présentement considérée par la présente invention, associée à un agent de capture de l'analyte,
- les Figures 7 à 11 représentent, en vue partielle et schématique, respectivement d'autres variantes d'exécution d'un dispositif selon l'invention,
- la Figure 12 représente, toujours de manière schématique, de côté et partiellement en coupe,-une autre variante d'exécution d'un dispositif selon l'invention ; la Figure 13 est une vue en coupe selon XIII-XIII du dispositif montré à la Figure 12,
- la Figure 14 représente, de manière schématique, une autre variante d'exécution de la présente invention,
- la Figure 15 représente, de manière schématique, un montage expérimental, ayant permis de mettre en évidence la pertinence du procédé selon l'invention, mis en oeuvre avec l'un quelconque des dispositifs de micro-analyse selon figures 1 à 14.

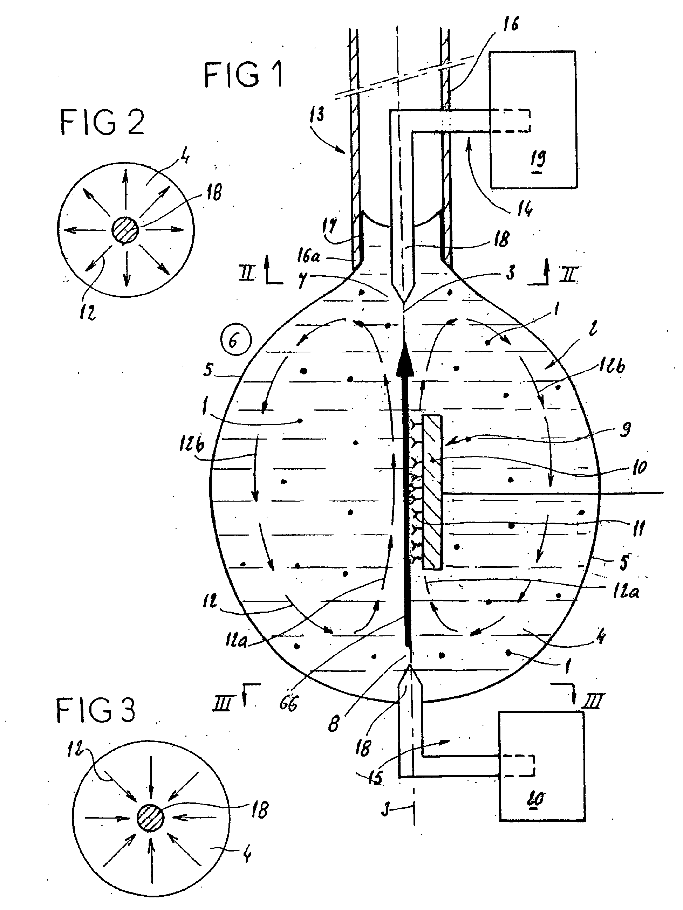

Par référence à la Figure 1, un dispositif selon l'invention comprend :
a) - Des moyens (13) pour former et/ou maintenir une entité volumique réactionnelle (2), par exemple une goutte, ayant une forme symétrique autour d'au moins un axe de référence (3) ; cette goutte est constituée uniquement par un milieu liquide, dit ci-après milieu interne (4), dans lequel est distribué (en solution et/ou suspension) un analyte; cette entité réactionnelle (2) présente un interface (5), de profil généralement convexe, avec un milieu externe 6 différent du milieu interne, en sorte que les milieux interne (4) et externe (6) présentent entre eux une tension superficielle ; et l'interface (5) a une surface développée fermée, autour de l'axe de référence (3),
b) - Des moyens (14 et 15) d'application d'un écart de température, disposés par rapport aux moyens (13) de formation et/ou maintien de l'entité réactionnelle (2), en sorte d'aligner un gradient thermique (66) avec l'axe de référence (3), au travers de l'entité réactionnelle (2), et en sorte de déterminer dans cette dernière une zone dite chaude (7) et une zone dite froide (8), de part et d'autre de l'axe de référence (3) ; ce gradient thermique induit une variation de la tension superficielle de l'interface (5), parallèlement à l'axe de référence (3), ce qui met en mouvement le milieu interne (4) selon un trajet (12) fermé de micro-convection forcée, lequel comprend une circulation axiale aller (12a), de la zone froide (8) à la zone chaude (7), et une circulation périphérique retour (12b) de la zone chaude (7) à la zone froide (8),
c) - Une surface réactive (9), obtenue à partir d'un substrat (10) sur lequel est fixé un réactif (11) de liaison spécifique avec l'analyte (1), le réactif de liaison étant distribué et fixé (par liaison chimique covalente et/ou adsorption) sur ledit substrat; la surface réactive (9) est disposée par rapport aux moyens (13) de formation et/ou maintien de l'entité réactionnelle (2), en sorte d'être placée au contact du milieu interne (4), sur le trajet (12) de micro-convection forcée du milieu interne (4).

Les moyens (13) de formation et/ou maintien de l'entité réactionnelle (2) comprennent un tube (16), par exemple capillaire, dont l'extrémité libre ouverte (16a) est adaptée pour la formation et la suspension de l'entité réactionnelle (2), c'est-à-dire d'une goutte du milieu interne (4). L'intérieur du tube (16) est revêtu d'une couche (17) d'un matériau hydrophile, limitée en longueur ou hauteur à l'extrémité libre (16a), et éventuellement une couche d'un matériau hydrophobe revêt le reste de la surface intérieure du tube (16).

Les moyens de génération du gradient thermique (66) comprennent des moyens de chauffage (14) échangeant de la chaleur avec le milieu interne (4) de l'entité réactionnelle (2), du côté de la zone chaude (7), et des moyens de refroidissement (15), échangeant du froid avec le milieu interne (4) précité du côté de la zone froide (8).

A titre d'exemple, et de manière non limitative, les moyens de chauffage (14) et/ou les moyens de refroidissement (15) comprennent un élément métallique (18), dont l'extrémité libre est pointue ou biseautée, disposé coaxialement à l'axe de référence (3), et immergé à son extrémité libre au sein du milieu interne (4) de l'entité réactionnelle (2). Ce même élément métallique est relié thermiquement à l'autre extrémité à une source chaude (19), ou à une source froide (20) selon le cas. Chacune de ces sources peut être constituée par un bain liquide thermostaté, ou par un module thermique à effet PELTIER.

A titre d'exemple, les moyens de chauffage (14) ou les moyens de refroidissement (15) sont constitués par le milieu externe ; ou les moyens de chauffage (14) et/ou les moyens de refroidissement (15) sont constitués par un ou des éléments métalliques (18).

De manière non représentée, le dispositif selon l'invention comprend une enceinte de confinement du milieu externe (6), par exemple de l'air ambiant saturé en humidité.

Le dispositif précédemment décrit permet de mettre en oeuvre, ou s'intègre dans tout procédé pour isoler l'analyte (1), à partir d'un échantillon de départ le contenant. Ce dispositif permet la mise en oeuvre d'un procédé, comprenant les étapes suivantes, indépendamment de leur ordre chronologique.
a) - Former et/ou maintenir l'entité volumique réactionnelle (2), ayant une forme symétrique autour d'au moins l'axe de référence (3), cette entité étant constituée uniquement par un milieu liquide, ou milieu interne (4), dans lequel est distribué l'analyte (1), obtenu à partir de tout ou partie de l'échantillon de départ ; comme dit plus haut, cette entité réactionnelle (2) présente une interface (5) avec le milieu externe (6), éventuellement confiné, ce milieu externe étant différent du milieu interne (4), et présentant de ce fait avec celui-ci une tension superficielle ; comme le montre la Figure 1, l'interface (5) a une surface développée fermée, de profil convexe, autour de l'axe de référence (3).
b) - Par l'application d'un écart de température, générer un gradient thermique (66) selon l'axe de référence (3), au travers de l'entité réactionnelle (2), en sorte de déterminer dans cette dernière la zone chaude (7) et la zone froide (8) ; comme dit plus haut, c'est ce gradient thermique qui induit une variation de la tension superficielle le long de l'interface (5), parallèlement à l'axe de référence (3), ce qui met en mouvement le milieu interne (4) selon le trajet fermé (12) de micro-convection forcée, comprenant, et une circulation axiale aller (12a), de la zone froide (8) à la zone chaude (7), et une circulation périphérique retour (12b), de la zone chaude (7) à la zone froide (8).
c) - Eventuellement, disposer de ou obtenir la surface réactive (9), comprenant les substrat (10) et le réactif (11) de liaison spécifique avec l'anatyte (1), ce réactif de liaison étant distribué et fixé sur cette surface,
d) - Placer la surface réactive (9), sur le trajet (12) de micro-convection forcée du milieu interne (4).

Préférentiellement, l'entité volumique réactionnelle (2) a un volume au plus égal à 300 µl, et préférentiellement compris entre 0,1 et 100 µl, par exemple quelques dizaines de µl. Le volume de 5 µl est utilisé, car correspondant au volume d'une goutte.

La tension superficielle du milieu interne (4), par rapport au milieu externe (6), est au moins égale à 10 N/m, et préférentiellement comprise entre 10⁻² et 1 N/m.

Préférentiellement, le milieu liquide interne comprend de l'eau, et est par exemple une solution aqueuse dans laquelle l'analyte (1) est suspendu et/ou dissout. Par exemple, s'agissant d'un analyte du type ligand biologique, tel que anticorps ou antigène, ou séquence nucléotidique, le milieu liquide interne est un tampon comprenant, outre de l'eau, différents ingrédients ou agents, tels que sels, composés organiques, etc. Dans ce cas, préférentiellement, le milieu externe (6) est de l'air chargé en vapeur d'eau.

Comme le montre la figure 1, l'axe de référence (3) est disposé verticalement, et le cas échéant, en correspondance, le gradient thermique (66) est disposé de bas en haut.

Ce gradient thermique (66) est donc généré en apportant au milieu interne (4), du froid dans la zone froide (8) de l'entité réactionnelle (2), et du chaud dans la zone chaude (7) de cette même entité réactionnelle, par exemple avec les moyens précédemment décrits, étant entendu que la chaleur peut être apportée dans la zone chaude (7), ou extraite dans la zone froide (8), par tous autres moyens ; ainsi la chaleur peut être apportée par illumination de la zone chaude (7) avec un faisceau infra-rouge ou laser.

Comme montré à la Figure 1, on génère le gradient thermique (66) en apportant au milieu interne (4) du chaud dans la zone chaude (7) de l'entité réactionnelle (2), et le chaud est apporté, à titre d'exemple, par échange conductif avec un élément de chauffage, sous forme de la tige métallique (18), disposé au moins pour partie au sein du milieu interne (4), du côté de son extrémité chaude (7).

La surface réactive (9) est complètement immergée au sein du milieu interne (4), entre la zone chaude (7) et la zone froide (8), par exemple au plus près de l'axe de référence (3).

Préférentiellement, la surface réactive (9) est positionnée au plus près de l'axe de référence (3), car l'ensemble des trajets (12) de micro-convection forcée passent tous à cet endroit, comme on le comprend par l'observation des Figures 1 à 3.

Pour maintenir l'intégrité de l'entité réactionnelle (2), et en particulier lui assurer une durée de vie compatible avec la durée de mise en oeuvre du procédé, la température dans la zone chaude (7) de l'entité réactionnelle (2) est maintenue à une valeur inférieure à la température d'ébullition du milieu interne (4), et la température dans la zone froide (8) de cette même entité est maintenue à une valeur supérieure à la température de congélation du milieu interne (4).

Selon l'invention, en faisant varier le gradient thermique (66), dont la valeur nominale est par exemple égale à au moins 30°C, on contrôle la vitesse de la micro-convection forcée du milieu interne (4).

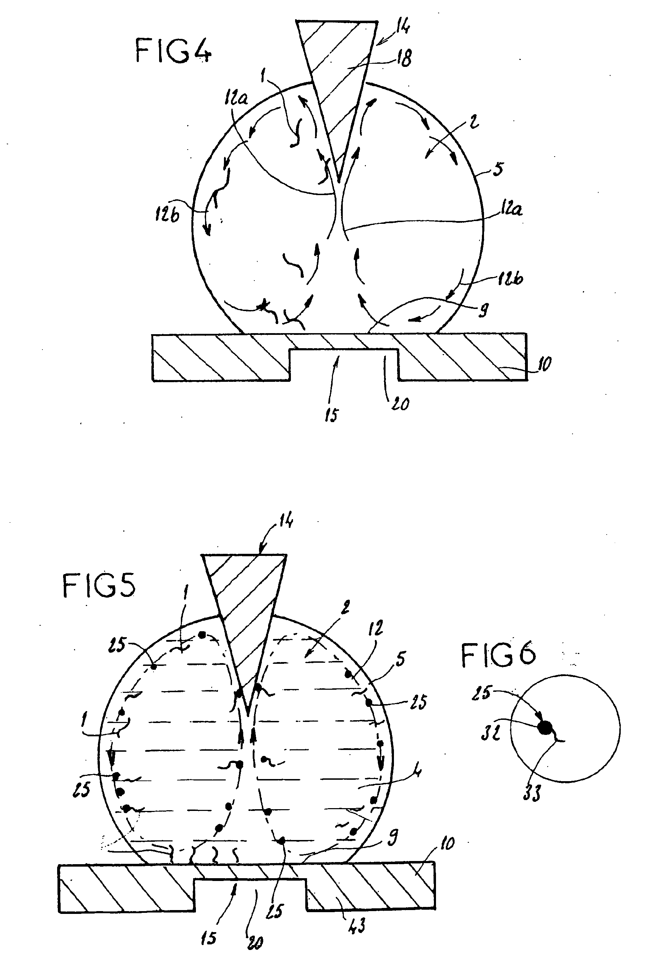

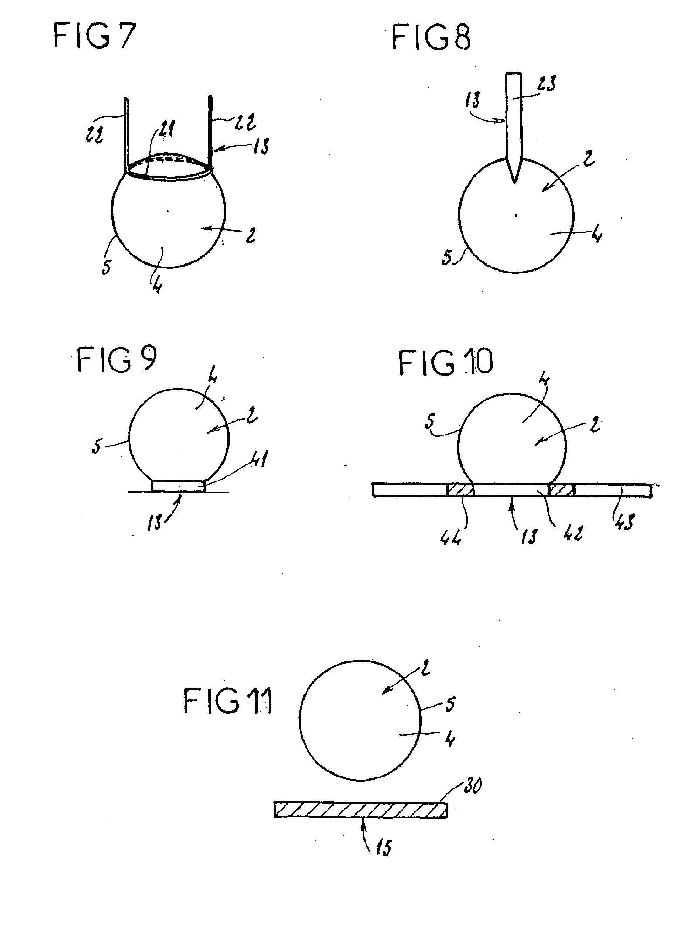

Conformément à la Figure 4, les moyens (13) de formation et/ou maintien de l'entité réactionnelle (2) comprennent un moyen de pose de celle-ci sur un support plan, lequel peut être constitué par un plot hydrophile (41), comme montré à la Figure 9, ou par une zone hydrophile (42) d'un support (43), circonscrite par une zone hydrophobe (44), comme montré à la Figure 8.

Par « plot hydrophile », on entend un plot dont la surface supérieure est hydrophile, mais pas les flancs latéraux.

Conformément à la Figure 5 le support, limité et circonscrit à la surface extérieure de contact avec l'entité réactionnelle (2), forme un substrat pour le réactif (11) de liaison spécifique avec l'analyte (1). Les moyens de refroidissement (15) sont reliés thermiquement, par exemple par conduction, avec le support (43), et par conséquent avec la surface réactive (9), en sorte que cette dernière se trouve refroidie.

Selon la Figure 4, l'analyte (1) représenté schématiquement est un brin constitué par une séquence nucléotidique d'intérêt, par exemple appartenant à un agent pathogène, tel que bactérie ou virus.

Comme précédemment, les moyens de chauffage (14) peuvent être reliés thermiquement, le cas échéant par conduction, avec la surface réactive (9).

De manière connue en soi, comme montré par les Figures 5 et 6, l'analyte (1) est lié à une particule (25), cette dernière comprenant un support (32) et un agent de capture (33) de l'analyte (1), lié au support (32). La liaison entre le support (32) et l'agent de capture et/ou entre l'agent de capture et l'analyte est labile à la température de la zone chaude (7) de l'entité (2) réactionnelle, et effective à toute température comprise entre celle de la zone chaude (7) et celle de la zone froide (8) de l'entité réactionnelle (2). Aux fins de la détermination de l'analyte, on distribue et suspend ces particules (25) dans le milieu interne de l'entité réactionnelle.

L'élément métallique (18), appartenant aux moyens de chauffage (14), est aimanté, de manière à générer un champ magnétique, permanent ou temporaire, au sein du milieu interne (4) de l'entité réactionnelle (2), ce champ magnétique demeurant spatialement à l'écart de la surface réactive (9).

La micro-convection forcée selon le trajet (12), en coopération avec les propriétés précitées du réactif intermédiaire (25) sous forme de particules d'une part, et le champ magnétique incorporé dans les moyens de chauffage (14), d'autre part, ont pour effet que :
- dans la circulation axiale ascendante du milieu interne, les particules (25) capturent l'analyte, puis sont confinées au contact des moyens de chauffage (14), par exemple l'extrémité de la tige (18),
- au contact des moyens de chauffage, les particules (25) labiles se dissocient, et les parties dissociées sont entraînées ensemble dans la circulation périphérique descendante du milieu interne, pour aboutir au contact de la surface réactive (9),
- au contact de cette surface (9), refroidie, l'analyte (1) se lie spécifiquement,
- au total, comme il n'existe pratiquement pas de volume mort, c'est-à-dire non affecté par la micro-convection forcée, pratiquement tout l'analyte (1) se trouve collecté et entraîné au contact de la surface réactive (9), et collecté sur cette dernière.

On se référera à cet égard aux Figures 5 et 6.

Toute particule telle que précédemment définie peut être une particule magnétique qui peut être piégée par une source magnétique, telle qu'un aimant. Une telle source magnétique est située au niveau de ou appartient aux moyens générant la zone chaude (7).

Conformément à la Figure 7, les moyens (13) de formation et/ou maintien de l'entité réactionnelle (2) consistent en un anneau (21) suspendu par deux branches parallèles (22), verticales et diamétralement opposées.

Conformément à la Figure 8, ces mêmes moyens (13) consistent en une tige pleine (23) biseautée et rainurée.

Conformément à la Figure 11, le froid est apporté par échange radiatif et /ou convection, avec un émetteur froid (30) disposé à distance de l'entité réactionnelle (2), du côté de son extrémité froide (8). Par exemple, cet émetteur froid (30) consiste en un module plat à effet PELTIER.

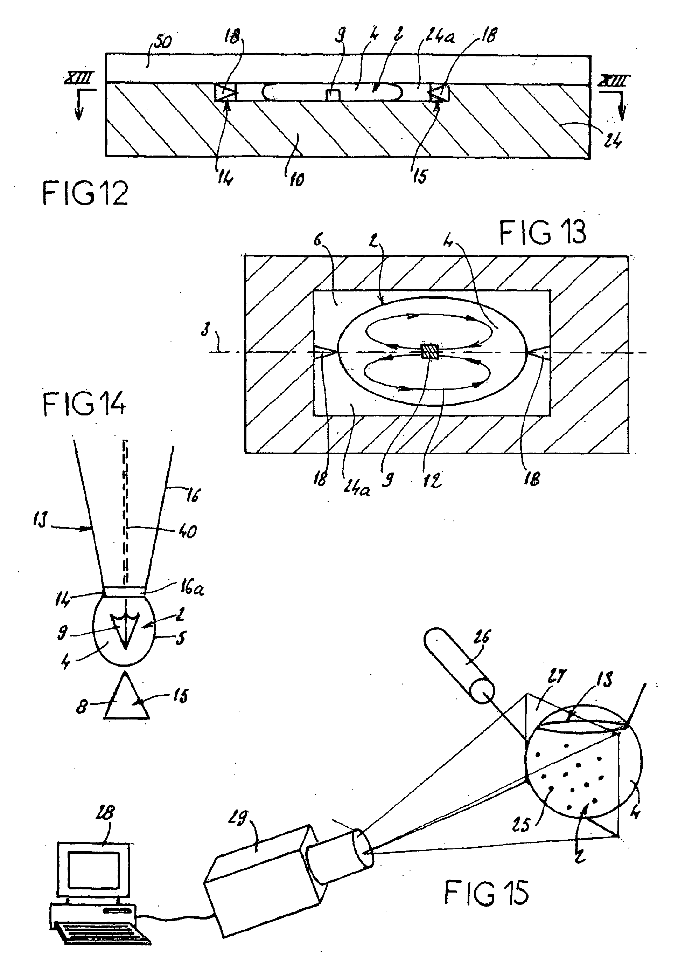

Conformément aux Figures 12 et 13, le milieu externe 6 est une phase fluidique, liquide ou gazeuse. A cette fin, on prévoit une plaque (24) d'un matériau plastique, dans laquelle est ménagée une cavité de confinement (24a) de l'entité volumique réactionnelle (2), dont l'axe de référence (3) est par exemple disposé horizontalement. Cette cavité de confinement (24a) a une forme aplatie ou plane, et est donc disposée horizontalement. Cette cavité de confinement (24a) est par ailleurs fermée par un couvercle ou film (50).

Le dispositif représenté aux Figures 12 et 13 peut être obtenu par toute technique appropriée, en particulier de micro-gravure dans tout substrat compatible, tel que du silicium.

Comme montré à la Figure 13, la cavité (24a) a toute forme appropriée, et le milieu interne (4) est de forme ronde, voire ovale, préférentiellement symétrique par rapport à l'axe de référence (3), en sorte que les trajets (12) de micro-convection s'effectuent sans contrainte physique.

Le milieu externe (6) est confiné au sein de la cavité (24a). Il est constitué par exemple d'air emprisonné, créant, selon un plan de coupe parallèle au fond de la cavité (24a) et au film (50), au niveau du milieu interne (4), une interface ronde ou ovoïde avec ledit milieu externe (6).

Conformément à la Figure 14, les moyens (13) de formation et/ou maintien de l'entité réactionnelle (2) consistent en un tube cônique (16), à l'extrémité libre (16a) duquel sont compris ou confondus les moyens de chauffage (14), obtenus par effet résistif, s'agissant d'un tube métallique.

Conformément à cette même Figure 14, un organe réactionnel mobile, par exemple une tige (40), est disposé à l'intérieur du tube (16), et comprend à son extrémité libre une surface réactive (9) ayant une forme hydrodynamique, par exemple en forme de trépan. Cet organe réactionnel est susceptible de se déplacer entre deux positions, à savoir une position inactive, à l'extérieur de l'entité réactionnelle (2), et une position active, dans laquelle la surface réactive (9) est immergée au sein du milieu interne (4) formant l'entité réactionnelle (2).

Bien entendu, au terme de l'exécution du procédé, on détermine l'analyte (1) lié à la surface réactive (9), par tout moyen approprié, de deux manières différentes, à savoir :
- soit la surface réactive demeure au contact du milieu interne (4), pendant la détermination,
- soit la surface réactive est disposée à l'écart du milieu interne (4), au moment de la détermination.

La pertinence des principes de micro-analyse exposés précédemment a été mise en évidence selon le protocole expérimental suivant :

Tout d'abord on dispose d'un milieu liquide interne (4), constitué par un tampon dit TeNacl, ayant la composition suivante : Triton X100 0,05 %, Tris 10 mM Ph8, EDTA, NaCl1M, ADN de sperme de saumon à 0,05%.

Dans ce milieu liquide sont dispersées et suspendues des microbilles fluorescentes, dites DIPF-8831, vendues par la Société MOLECULAR PROBES. La concentration de ces microbilles est de l'ordre de 500 unités par µl.

La densité de ces microbilles est de l'ordre de 1,05 g/ml, ce qui est proche de la densité du milieu interne (4).

Conformément à la Figure 1, on dispose d'un tube métallique capillaire (16), ayant à son extrémité un diamètre interne de 2 mm, dont l'extrémité libre (16a) est biseautée. Cette extrémité libre est recouverte, du côté intérieur avec un revêtement hydrophile (17), consistant en de la Bovine Serum Albumine (BSA). Cette même extrémité libre est chauffée par effet résistif, comme décrit ou montré par référence à la Figure 14.

Avec le tube (16) et le milieu interne (4) précédemment exemplifié, dans lequel sont suspendues les microbilles précitées, on forme à l'extrémité libre (16a) une entité réactionnelle (2), ayant la forme d'une goutte, dont le diamètre est compris entre 1 et 2,5 mm.

Le froid est apporté, en disposant d'un élément plat de refroidissement (30), comme montré à la Figure 6, c'est-à-dire par échange radiatif et/ou convection avec l'extrémité froide (8) de l'entité (2). Préférentiellement, l'écart de température générant le gradient thermique (66) est réglé à une valeur comprise entre 10 et 65°C.

Comme montré par le montage expérimental selon Figure 15, on illumine l'entité réactionnelle (2) avec un faisceau laser He-Ne, à une longueur d'ondes de 633 nm, tandis que les microbilles fluorescentes précitées absorbent à une longueur d'ondes de 625 nm, et réémettent à 645 nm. L'illumination laser est collimatée en sorte de déterminer, lors de sa traversée de l'entité réactionnelle (2), un plan (27) extrêmement fin, ayant une épaisseur comprise entre 50 et 100 µm. Ce plan est observé avec une caméra CDD (29), les images ainsi acquises étant traitées par tout système approprié (28).

Grâce à ce montage expérimental, on a pu établir et visualiser l'existence d'une micro-convection forcée conforme à la définition précédente, dont la vitesse varie grossièrement de 80 à 190 µm/s.

De manière générale, les étapes opératoires précédemment décrites et exemplifiées peuvent être généralisées à tout procédé pour isoler un analyte (1) à partir d'un échantillon liquide de départ le contenant, sur une surface réactive (9) en contact avec tout ou partie de l'échantillon de départ, et consistant à effectuer les étapes suivantes :
1) former et/ou maintenir une entité volumique réactionnelle (2), comprenant un milieu liquide interne (4), correspondant à tout ou partie de l'échantillon de départ, l'entité (2) présentant une interface (5) avec un milieu externe (6), présentant avec ce dernier une tension superficielle,
2) appliquer un écart de température entre au moins deux points thermiques situés :
   - au voisinage et/ou
   - à la surface et/ou
   - au sein de l'entité (2), lesdits points thermiques étant respectivement différents, quant à leurs températures et positionnements,
3) fixer l'analyte (1) sur la surface réactive (9), positionnée sur le trajet de convection forcée généré par l'écart de température.

Et ce procédé peut être caractérisé par les étapes suivantes (1) à (3):
1) former et/ou maintenir une entité volumique réactionnelle (2) ayant une forme symétrique autour d'un axe de référence (3), constituée uniquement par le milieu liquide dit interne (4), dans lequel est distribué l'analyte (1) obtenu à partir de tout ou partie de l'échantillon de départ, ladite entité réactionnelle présentant une interface (5) avec le milieu externe (6), éventuellement confiné, différent du milieu interne, présentant avec ce dernier une tension superficielle, ladite interface ayant une surface développée fermée autour dudit axe de référence (3),
2) générer un gradient thermique (66) selon l'axe de référence (3), au travers de l'entité réactionnelle (2), en sorte de déterminer dans cette dernière une zone chaude (7) et une zone froide (8), et induire une variation de la tension superficielle de l'interface (5), parallèlement à l'axe de référence (3), et mettre en mouvement le milieu interne (4) selon un trajet fermé (12) de micro-convection forcée, comprenant une circulation axiale aller (12a) de la zone froide (8) à la zone chaude (7), et une circulation périphérique retour (12b) de la zone chaude à la zone froide,
3) placer la surface réactive (9) sur le trajet (12) de micro-convection forcée dudit milieu interne.

La surface réactive (9) peut comprendre une surface indépendante des points thermiques qui génèrent l'écart de température (6), ou une surface appartenant à la zone (7) ou à la zone (8).

## Revendications

1. Procédé pour isoler un analyte (1) à partir d'un échantillon de départ le contenant, sur une surface réactive (9) en contact avec tout ou partie de l'échantillon de départ, **caractérisé en ce qu'**il consiste à effectuer les étapes suivantes :
1) former et/ou maintenir une entité volumique réactionnelle (2), comprenant un milieu liquide interne (4), correspondant à tout ou partie de l'échantillon de départ, l'entité (2) présentant une interface (5) avec un milieu externe (6), présentant avec ce dernier une tension superficielle,
2) appliquer un écart de température entre au moins deux points thermiques situés :
- au voisinage et/ou
- à la surface et/ou
- au sein
de l'entité (2), lesdits points thermiques étant respectivement différents, quant à leurs températures et positionnements,
3) fixer l'analyte (1) sur la surface réactive (9), positionnée sur le trajet de convection forcée généré par l'écart de température.

2. Procédé selon la revendication 1, **caractérisé par** les étapes (1) à (3) suivantes :
1) former et/ou maintenir, pendant la durée de ladite étape, une entité volumique réactionnelle (2) ayant une forme symétrique autour d'un axe de référence (3), constituée uniquement par le milieu liquide dit interne (4), dans lequel est distribué l'analyte (1) obtenu à partir de tout ou partie de l'échantillon de départ, ladite entité réactionnelle présentant une interface (5) avec le milieu externe (6), éventuellement confiné, différent du milieu interne, présentant avec ce dernier une tension superficielle, ladite interface ayant une surface développée fermée autour dudit axe de référence (3),
2) générer un gradient thermique (66) selon l'axe de référence (3), au travers de l'entité réactionnelle (2), en sorte de déterminer dans cette dernière une zone chaude (7) et une zone froide (8), et induire une variation de la tension superficielle de l'interface (5), parallèlement à l'axe de référence (3), et mettre en mouvement le milieu interne (4) selon un trajet fermé (12) de micro-convection forcée, comprenant une circulation axiale aller (12a) de la zone froide (8) à la zone chaude (7), et une circulation périphérique retour (12b) de la zone chaude à la zone froide,
3) placer la surface réactive (9) sur le trajet (12) de micro-convection forcée dudit milieu interne.

3. Procédé selon la revendication 2, **caractérisé en ce que** la surface réactive (9) comprend une surface indépendante des points thermiques qui génèrent l'écart de température (6), ou une surface appartenant à une dite zone (7 ou 8).

4. Procédé selon l'une quelconque des revendications 1 à 3, **caractérisé en ce que** l'entité volumique réactionnelle (2) est une goutte.

5. Procédé selon l'une quelconque des revendications 1 à 4, **caractérisé en ce que** le milieu externe (6) est de l'air chargé en vapeur d'eau.

6. Procédé selon la revendication 2, **caractérisé en ce que** l'axe de référence (3) est disposé verticalement, et par exemple le gradient thermique (6) est disposé de bas en haut.

7. Procédé selon la revendication 6, **caractérisé en ce qu'**on génère le gradient thermique (66) en apportant au milieu interne (4) de la chaleur dans la zone chaude (7) de l'entité réactionnelle (2), et le chaud est apporté par échange conductif avec un élément de chauffage (18) disposé au moins pour partie au sein du milieu interne (4), du côté de sa zone chaude (7).

8. Procédé selon l'une quelconque des revendications 2 à 7, **caractérisé en ce que** la surface réactive (9) est immergée au sein du milieu interne (4), entre la zone chaude (7) et la zone froide (8), par exemple au plus près de l'axe de référence (3).

9. Procédé selon l'une quelconque des revendications 7 à 8, l'analyte (1) étant lié à une particule, **caractérisé en ce que**, premièrement, la particule, comprenant un support (32) et un agent de capture (33) de l'analyte (1), lié audit support (32), la liaison entre ledit support et ledit agent de capture et/ou entre l'agent de capture et l'analyte étant labile à la température de la zone chaude (7) de l'entité réactionnelle (2), et effective à toute température comprise entre celle de la zone chaude (7) et celle de la zone froide (8) de ladite entité réactionnelle (2), et deuxièmement on distribue et suspend la particule dans le milieu interne (4) de l'entité réactionnelle (2).

10. Procédé, selon la revendication 9, **caractérisé en ce que** la particule est une particule magnétique qui peut être piégée par une source magnétique, telle qu'un aimant.

11. Procédé, selon les revendications 2 et 10, **caractérisé en ce que** la source magnétique, qui peut piéger les particules magnétiques, est située au niveau de ou appartient aux moyens générant la zone chaude (7).

12. Procédé selon l'une quelconque des revendications 1 à 11, **caractérisé en ce qu'**on effectue une étape de lecture/détection au contact du milieu interne (4) à l'écart dudit milieu interne, après fixation de l'analyte (1) sur la surface réactive (9).

13. Procédé selon l'une quelconque des revendications 1 à 12, **caractérisé en ce que** la température de la zone chaude (7) de l'entité réactionnelle (2) est maintenue à une valeur inférieure à la température d'ébullition du milieu interne (4), et la température à la zone froide (8) de ladite entité est maintenue à une valeur supérieure à la température de congélation dudit milieu interne (4).

14. Procédé selon l'une quelconque des revendications 2 à 13, **caractérisé en ce qu'**on contrôle la vitesse de la micro-convection forcée (12) du milieu interne (4), par variation de l'écart de température entre les zones chaude (7) et froide (8), dont la valeur nominale est par exemple égale à 30°C.

15. Dispositif pour isoler sur une surface réactive (9) un analyte, à partir d'un échantillon liquide de départ le contenant, **caractérisé en ce qu'**il comprend :
a) des moyens (13) pour former et/ou maintenir une entité volumique réactionnelle (2) ayant une forme symétrique autour d'au moins un axe de référence (3), constituée uniquement par un milieu liquide dit interne (4), dans lequel est distribué un analyte (1), ladite entité réactionnelle présentant une interface (5) avec un milieu externe (6) différent du milieu interne, présentant avec ce dernier une tension superficielle, ladite interface ayant une surface développée fermée autour dudit axe de référence (3),
b) des moyens (14, 15) d'application d'un écart de température, disposés par rapport aux moyens (13) de formation de l'entité réactionnelle (2), en sorte d'aligner un gradient thermique (66) avec l'axe de référence (3) au travers de l'entité réactionnelle (2), et de déterminer dans cette dernière une zone chaude (7) et une zone froide (8), de part et d'autre de l'axe de référence, induire une variation de la tension superficielle de l'interface (5), parallèlement à l'axe de référence (3), et mettre en mouvement le milieu interne (4) selon un trajet (12) fermé de micro-convection forcée, comprenant une circulation axiale aller (12a) de la zone froide (8) à la zone chaude (7), et une circulation périphérique retour (12b) de la zone chaude à la zone froide,
c) une surface réactive (9) obtenue à partir d'un substrat (10) sur lequel et fixé un réactif de liaison (14) spécifique avec l'analyte (1), ledit réactif de liaison étant distribué et fixé sur ledit substrat ; ladite surface réactive (9) étant disposée par rapport aux moyens (13) de formation et/ou maintien de l'entité réactionnelle (2), en sorte d'être placée au contact du milieu interne (4) sur le trajet (12) de micro-convection forcée dudit milieu interne.

16. Dispositif selon la revendication 15, **caractérisé en ce que** les moyens (13) de formation et/ou maintien de l'entité réactionnelle (2) comprennent un moyen de suspension de cette dernière, choisi dans le groupe constitué par un tube (16), par exemple capillaire, dont l'extrémité libre ouverte (16a) est adaptée pour former et suspendre l'entité réactionnelle (2), un anneau (21), et une tige pleine (23) biseautée rainurée.

17. Dispositif selon la revendication 16, **caractérisé en ce que** l'intérieur du tube 16 est revêtu par une couche (17) d'un matériau hydrophile, limitée en longueur ou en hauteur à l'extrémité libre (16a), et éventuellement, une couche d'un matériau hydrophobe revêt le reste de la surface intérieure dudit tube (16).

18. Dispositif selon l'une quelconque des revendications 15 à 17, **caractérisé en ce que** les moyens de génération du gradient thermique (66) comprennent des moyens de chauffage (14) échangeant de la chaleur, avec le milieu interne (4) de l'entité réactionnelle, du côté de la zone chaude (7), et des moyens de refroidissement (15) échangeant du froid avec le milieu interne (4), du côté de la zone froide (8).

19. Dispositif selon la revendication 18, **caractérisé en ce que** les moyens de chauffage (14) et/ou les moyens de refroidissement (15) comprennent un élément métallique (18) disposé coaxialement à l'axe de référence (3), immergé à une extrémité au sein du milieu interne (4) de l'entité réactionnelle (2), relié thermiquement à l'autre extrémité à une source chaude (19) ou une source froide (20) selon le cas.

20. Dispositif, selon l'une quelconque des revendications 15 à 19, **caractérisé en ce que** les moyens de chauffage (14) ou les moyens de refroidissement (15) sont constitués par le milieu externe.

21. Dispositif, selon l'une quelconque des revendications 15 à 19, **caractérisé en ce que** les moyens de chauffage (14) et/ou les moyens de refroidissement (15) sont constitués par un ou des éléments métalliques (18).

22. Dispositif selon l'une quelconque des revendications 15 à 21, **caractérisé en ce que** un élément aimanté est présent de manière à générer un champ magnétique, permanent ou temporaire, au sein du milieu interne (4) de l'entité réactionnelle (2), spatialement à l'écart de la surface réactive (9).

23. Dispositif selon la revendication 22, **caractérisé en ce que** l'élément aimanté est constitué par un élément métallique (18).

24. Dispositif selon l'une quelconque des revendications 15 à 23, **caractérisé en ce que** le milieu externe (6) est une phase (24) gazeuse ou liquide, inerte vis à vis du milieu interne (4), disposée au sein d'une cavité de confinement (24a) de l'entité volumique réactionnelle (2), dont l'axe de référence (3) est disposé par exemple horizontalement.

25. Dispositif selon la revendication 24, **caractérisé en ce que** la cavité de confinement (24a) a une forme aplatie ou plane.

26. Dispositif selon l'une quelconque des revendications 18 à 21, **caractérisé en ce que** les moyens de refroidissement (15) et/ou de chauffage (14) sont reliés thermiquement, par exemple par conduction, avec la surface réactive (9).

27. Dispositif selon la revendication 15, **caractérisé en ce qu'**il comprend un organe réactionnel, par exemple une tige (40), comprenant à une extrémité libre, la surface réactive (9), susceptible de se déplacer, par exemple selon l'axe de référence (3), entre deux positions, à savoir une position inactive, dans laquelle la surface réactive (9) demeure à l'extérieur de l'entité réactionnelle (2), et une position active, dans laquelle la surface réactive (9) est immergée au sein du milieu interne (4).

28. Dispositif selon la revendication 15, **caractérisé en ce que** les moyens (13) de formation et/ou maintien de l'entité réactionnelle (2) comprennent un moyen de pose de cette dernière, choisi dans le groupe constitué par un plot (41) et/ou une zone hydrophile (42) d'un support (43), circonscrite par une zone hydrophobe (44).

29. Dispositif selon l'une quelconque des revendications 15 à 27, **caractérisé en ce que** la surface réactive (9) a une forme hydrodynamique.

## Claims

1. A method for isolating an analyte (1) from an initial sample containing it, on a reactive surface (9) in contact with some or all of the initial sample, **characterized in that** it consists in carrying out the following steps:
1) forming and/or maintaining a reaction volume unit (2), comprising an internal liquid medium (4) corresponding to some or all of the initial sample, the unit (2) having an interface (5) with an external medium (6) and having a surface tension with respect to it,
2) applying a temperature difference between at least two thermal points lying:
- in the vicinity of and/or
- at the surface of and/or
- inside
the unit (2), said thermal points being respectively different as regards their temperatures and positioning,
3) fixing the analyte (1) on the reactive surface (9) positioned in the path of forced convection generated by the temperature difference.

2. The method as claimed in claim 1, **characterized by** the following steps (1) to (3):
1) forming and/or maintaining for the duration of said step a reaction volume unit (2) having a shape which is symmetrical about a reference axis (3), consisting only of the so-called internal liquid medium (4) in which the analyte (1) obtained from some or all of the initial sample is distributed, said reaction unit having an interface (5) with the optionally confined external medium (6), which is different to the internal medium, and having a surface tension with respect to it, said interface having a closed developed surface about said reference axis (3),
2) generating a thermal gradient (66) through the reaction unit (2) along the reference axis (3), so as to define a hot region (7) and a cold region (8) therein and to induce a variation in the surface tension of the interface (5), parallel to the reference axis (3), and to set the internal medium (4) in motion along a closed path (12) of forced microconvection, comprising an axial forward circulation (12a) from the cold region (8) to the hot region (7) and a peripheral return circulation (12b) from the hot region to the cold region,
3) placing the reactive surface (9) in the forced microconvection path (12) of said internal medium.

3. The method as claimed in claim 2, **characterized in that** the reactive surface (9) comprises a surface independent of the thermal points which generate the temperature difference (6), or a surface belonging to one said region (7 or 8).

4. The method as claimed in any one of claims 1 to 3, **characterized in that** the reaction volume unit (2) is a drop.

5. The method as claimed in any one of claims 1 to 4, **characterized in that** the external medium (6) is air laden with water vapor.

6. The method as claimed in claim 2, **characterized in that** the reference axis (3) is arranged vertically, and for example the thermal gradient (6) is arranged from the bottom upward.

7. The method as claimed in claim 6, **characterized in that** the thermal gradient (66) is generated by supplying heat to the internal medium (4) in the hot region (7) of the reaction unit (2); and the heat is supplied by conductive exchange with a heating element (18) arranged at least partly inside the internal medium (4), on the same side as its hot region (7).

8. The method as claimed in any one of claims 2 to 7, **characterized in that** the reactive surface (9) is immersed in the internal medium (4), between the hot region (7) and the cold region (8), for example as close as possible to the reference axis (3).

9. The method as claimed in either one of claims 7 and 8, the analyte (1) being bound to a particle, **characterized in that** firstly the particle comprising a support (32) and a capture agent (33) for the analyte (1), which is bound to said support (32), the binding between said support and said capture agent and/or between the capture agent and the analyte being labile at the temperature of the hot region (7) of the reaction unit (2), and effective at any temperature lying between that of the hot region (7) and that of the cold region (8) of said reaction unit (2), and secondly the particle is distributed and suspended in the internal medium (4) of the reaction unit (2).

10. The method as claimed in claim 9, **characterized in that** the particle is a magnetic particle that can be trapped by a magnetic source, such as a magnet.

11. The method as claimed in claims 2 and 10, **characterized in that** the magnetic source which can trap the magnetic particles is located level with or belongs to the means generating the hot region (7).

12. The method as claimed in any one of claims 1 to 11, **characterized in that** a step of reading and/or detection is carried out in contact with the internal medium (4) away from said internal medium, after the analyte (1) has been fixed to the reactive surface (9).

13. The method as claimed in any one of claims 1 to 12, **characterized in that** the temperature of the hot region (7) of the reaction unit (2) is maintained at a value lower than the boiling temperature of the internal medium (4), and the temperature of the cold region (8) of said unit is maintained at a value higher than the freezing temperature of said internal medium (4).

14. The method as claimed in any one of claims 2 to 13, **characterized in that** the rate of the forced microconvection (12) of the internal medium (4) is controlled by variation of the temperature difference between the hot and cold regions (7 and 8, respectively), the nominal value of which is for example equal to 30°C.

15. A device for isolating an analyte on a reactive surface (9) from an initial liquid sample containing it, **characterized in that** it comprises:
a) means (13) for forming and/or maintaining a reaction volume unit (2) having a shape which is symmetrical about at least one reference axis (3), consisting only of a so-called internal liquid medium (4) in which an analyte (1) is distributed, said reaction unit having an interface (5) with an external medium (6), which is different to the internal medium, and having a surface tension with respect to it, said interface having a closed developed surface about said reference axis (3),
b) means (14, 15) for applying a temperature difference, which are arranged with respect to the means (13) for forming the reaction unit (2) so as to align a thermal gradient (66) with the reference axis (3) through the reaction unit (2) and to define a hot region (7) and a cold region (8) on either side of the reference axis therein, to induce a variation in the surface tension of the interface (5), parallel to the reference axis (3), and to set the internal medium (4) in motion along a closed path (12) of forced microconvection, comprising an axial forward circulation (12a) from the cold region (8) to the hot region (7) and a peripheral return circulation (12b) from the hot region to the cold region,
c) a reactive surface (9) obtained from a substrate (10) on which a reagent (14) for specific binding with the analyte (1) is fixed, said binding reagent being distributed and fixed on said substrate; said reactive surface (9) being arranged with respect to the means (13) for forming and/or maintaining the reaction unit (2) so as to be placed in contact with the internal medium (4) in the forced microconvection path (12) of said internal medium.

16. The device as claimed in claim 15, **characterized in that** the means (13) for forming and/or maintaining the reaction unit (2) comprise a means for suspending it, which is selected from the group consisting of a tube (16), for example a capillary tube, the open free end (16a) of which is designed to form and suspend the reaction unit (2), a ring (21), and a grooved, beveled solid rod (23).

17. The device as claimed in claim 16, **characterized in that** the inside of the tube (16) is lined with a layer (17) of a hydrophilic material, limited in length or in height to the free end (16a), and a layer of a hydrophobic material optionally lines the rest of the inner surface of said tube (16).

18. The device as claimed in any one of claims 15 to 17, **characterized in that** the means for generating the thermal gradient (66) comprise heating means (14) which exchange heat with the internal medium (4) of the reaction unit, on the same side as the hot region (7), and cooling means (15) which extract heat from the internal medium (4), on the same side as the cold region (8).

19. The device as claimed in claim 18, **characterized in that** the heating means (14) and/or the cooling means (15) comprise a metal element (18) arranged coaxially with the reference axis (3), immersed in the internal medium (4) of the reaction unit (2) at one end and thermally connected at the other end to a heat source (19) or a cooling source (20), as applicable.

20. The device as claimed in any one of claims 15 to 19, **characterized in that** the heating means (14) or the cooling means (15) consist of the external medium.

21. The device as claimed in any one of claims 15 to 19, **characterized in that** the heating means (14) and/or the cooling means (15) consist of one or more metal elements (18).

22. The device as claimed in any one of claims 15 to 21, **characterized in that** a magnetized element is present so as to generate a permanent or temporary magnetic field inside the internal medium (4) of the reaction unit (2), spatially away from the reactive surface (9).

23. The device as claimed in claim 22, **characterized in that** the magnetized element consists of a metal element (18).

24. The device as claimed in any one of claims 15 to 23, **characterized in that** the external medium (6) is a gas or liquid phase (24), which is inert with respect to the internal medium (4) and is arranged inside a cavity (24a) for confinement of the reaction volume unit (2), the reference axis of which (3) is arranged for example horizontally.

25. The device as claimed in claim 24, **characterized in that** the confinement cavity (24a) has a flattened or planar shape.

26. The device as claimed in any one of claims 18 to 21, **characterized in that** the cooling means (15) and/or the heating means (14) are thermally connected to the reactive surface (9), for example by conduction.

27. The device as claimed in claim 15, **characterized in that** it comprises a reaction component, for example a rod (40), comprising at a free end, the reactive surface (9), capable of being moved, for example along the reference axis (3), between two positions, namely an inactive position in which the reactive surface (9) remains outside the reaction unit (2) and an active position in which the reactive surface (9) is immersed in the internal medium (4).

28. The device as claimed in claim 15, **characterized in that** the means (13) for forming and/or maintaining the reaction unit (2) comprise a means for placing it, selected from the group consisting of a base (41) and/or a hydrophilic region (42) of a support (43), which is circumscribed by a hydrophobic region (44).

29. The device as claimed in any one of claims 15 to 27, **characterized in that** the reactive surface (9) has a hydrodynamic shape.

## Patentansprüche

1. Verfahren zur Isolation eines Analyten (1) aus einer ihn enthaltenden Ausgangsprobe, an einer reaktionsfähigen Oberfläche (9), die mit der gesamten Ausgangsprobe oder einem Teil davon in Kontakt steht, **dadurch gekennzeichnet, daß** es darin besteht, die folgenden Schritte durchzuführen:
1) Bildung und/oder Aufrechterhaltung eines Reaktionsvolumengebildes (2), umfassend ein inneres flüssiges Medium (4), das der gesamten Ausgangsprobe oder einem Teil davon entspricht, wobei das Gebilde (2) eine Grenzfläche (5) zu einem äußeren Medium (6) aufweist und mit letzterem eine Oberflächenspannung bildet,
2) Anlegung einer Temperaturdifferenz zwischen mindestens zwei thermischen Punkten, die sich
- in der Nähe und/oder
- an der Oberfläche und/oder
- innerhalb
des Gebildes (2) befinden, wobei sich diese thermischen Punkte in Bezug auf ihre Temperaturen und Lagen jeweils unterscheiden,
3) Fixierung des Analyten (1) an der reaktionsfähigen Oberfläche (9), die im Pfad der durch die Temperaturdifferenz erzeugten Zwangskonvektion liegt.

2. Verfahren nach Anspruch 1, **gekennzeichnet durch** die folgenden Schritte (1) bis (3):
1) Bildung und/oder Aufrechterhaltung eines Reaktionsvolumengebildes (2) während der Dauer dieses Schritts, das eine symmetrische Form um eine Referenzachse (3) aufweist, die ausschließlich aus dem flüssigen Medium, das als inneres flüssiges Medium (4) bezeichnet wird, besteht, in dem der von der gesamten Ausgangsprobe oder einem Teil davon erhaltene Analyt (1) verteilt ist, wobei dieses Reaktionsgebilde mit dem gegebenenfalls begrenzten, von dem inneren Medium unterschiedlichen, äußeren Medium (6) eine Grenzfläche (5) aufweist und mit letzterem eine Oberflächenspannung bildet, wobei die Grenzfläche eine geschlossen um die Referenzachse (3) ausgebildete Oberfläche aufweist,
2) Erzeugung eines Wärmegradienten (66) entlang der Referenzachse (3) **durch** das Reaktionsgebilde (2) hindurch, um in letzterem eine heiße Zone (7) und eine kalte Zone (8) zu definieren, und Induzieren einer Oberflächenspannungsvariation der Grenzfläche (5) parallel zu der Referenzachse (3) und Inbewegungsetzen des inneren Mediums (4) gemäß einem geschlossenen Zwangsmikrokonvektions-Pfad (12), umfassend ein axiales Hinzirkulieren (12a) von der kalten Zone (8) zu der heißen Zone (7) und ein peripheres Rückzirkulieren (12b) von der heißen Zone zu der kalten Zone,
3) Plazieren der reaktionsfähigen Oberfläche (9) in den Zwangsmikrokonvektions-Pfad (12) des inneren Mediums.

3. Verfahren nach Anspruch 2, **dadurch gekennzeichnet, daß** die reaktionsfähige Oberfläche (9) eine von den thermischen Punkten, die die Temperaturdifferenz (6) erzeugen, unabhängige Oberfläche oder eine zu einer genannten Zone (7 oder 8) gehörige Oberfläche umfaßt.

4. Verfahren nach einem der Ansprüche 1 bis 3, **dadurch gekennzeichnet, daß** es sich bei dem Reaktionsvolumengebilde (2) um einen Tropfen handelt.

5. Verfahren nach einem der Ansprüche 1 bis 4, **dadurch gekennzeichnet, daß** es sich bei dem äußeren Medium (6) um wasserdampfhaltige Luft handelt.

6. Verfahren nach Anspruch 2, **dadurch gekennzeichnet, daß** die Referenzachse (3) vertikal angelegt ist, und zum Beispiel der thermische Gradient (66) von unten nach oben angelegt ist.

7. Verfahren nach Anspruch 6, **dadurch gekennzeichnet, daß** man den thermischen Gradienten (66) **dadurch** erzeugt, daß man dem inneren Medium (4) Wärme in der heißen Zone (7) des Reaktionsgebildes (2) zuführt, und die Hitze durch Leitungsaustausch mit einem mindestens teilweise innerhalb des inneren Mediums (4) neben seiner heißen Zone (7) angeordneten Heizelement (18) zugeführt wird.

8. Verfahren nach einem der Ansprüche 2 bis 7, **dadurch gekennzeichnet, daß** die reaktionsfähige Oberfläche (9) in das innere Medium (4) zwischen der heißen Zone und der kalten Zone (8), zum Beispiel der Referenzachse (3) am nächsten, eintaucht.

9. Verfahren nach einem der Ansprüche 7 bis 8, wobei der Analyt (1) an ein Partikel gebunden ist, **dadurch gekennzeichnet, daß** erstens das Partikel, umfassend einen Träger (32) und einen Fänger (33) des Analyten (1), der an den Träger (32) gebunden ist, wobei die Bindung zwischen dem Träger und dem Fänger und/oder zwischen dem Fänger und dem Analyten gegenüber der Temperatur der heißen Zone (7) des Reaktionsgebildes (2) labil und bei jeglicher Temperatur zwischen derjenigen der heißen Zone (7) und derjenigen der kalten Zone (8) des gesamten Reaktionsgebildes (2) wirksam ist, und daß man zweitens das Partikel in dem inneren Medium (4) des Reaktionsgebildes (2) verteilt und suspendiert.

10. Verfahren nach Anspruch 9, **dadurch gekennzeichnet, daß** es sich bei dem Partikel um ein magnetisches Partikel handelt, das von einer Magnetquelle wie einem Magneten eingefangen werden kann.

11. Verfahren nach den Ansprüchen 2 und 10, **dadurch gekennzeichnet, daß** sich die Magnetquelle, die die magnetische Partikel einfangen kann, bei den Mitteln, die die heiße Zone (7) erzeugen, gelegen ist oder zu diesen gehört.

12. Verfahren nach einem der Ansprüche 1 bis 11, **dadurch gekennzeichnet, daß** man nach Fixierung des Analyten (1) an der reaktionsfähigen Oberfläche (9) einen Ablese/Nachweisschritt am Kontakt des inneren Mediums (4) mit der Differenz des inneren Mediums durchführt.

13. Verfahren nach einem der Ansprüche 1 bis 12, **dadurch gekennzeichnet, daß** die Temperatur der heißen Zone (7) des Reaktionsgebildes (2) bei einem Wert unter dem Siedepunkt des inneren Mediums (4) aufrechterhalten wird und daß die Temperatur bei der kalten Zone (8) des Gebildes bei einem Wert oberhalb des Gefrierpunkts des inneren Mediums (4) aufrechterhalten wird.

14. Verfahren nach einem der Ansprüche 2 bis 13, **dadurch gekennzeichnet, daß** man die Rate der Zwangsmikrokonvektion (12) des inneren Mediums (4) durch Variieren des Temperaturunterschieds zwischen der heißen (7) und der kalten (8) Zone, dessen Nennwert zum Beispiel 30°C beträgt, kontrolliert.

15. Einrichtung zum Isolieren eines Analyten aus einer flüssigen Ausgangsprobe, die diesen enthält, an einer reaktionsfähigen Oberfläche (9), **dadurch gekennzeichnet, daß** sie folgendes umfaßt:
a) Mittel (13) zur Bildung und/oder Aufrechterhaltung eines Reaktionsvolumengebildes (2), das eine symmetrische Form um eine Referenzachse (3) aufweist, die ausschließlich von dem flüssigen Medium, das als inneres flüssiges Medium (4) bezeichnet wird, besteht, in dem der von der gesamten Ausgangsprobe oder einem Teil davon erhaltene Analyt (1) verteilt ist, wobei dieses Reaktionsgebilde mit dem von dem inneren Medium unterschiedlichen, äußeren Medium (6) eine Grenzfläche (5) aufweist und mit letzterem eine Oberflächenspannung bildet, wobei die Grenzfläche eine geschlossen um die Referenzachse (3) ausgebildete Oberfläche aufweist,
b) Mittel (14, 15) zum Anlegen einer Temperaturdifferenz, die in Bezug auf die Mittel (13) zur Bildung des Reaktionsgebildes (2) so angeordnet sind, daß sie einen thermischen Gradienten (66) mit der Referenzachse (3) durch das Reaktionsgebilde hindurch (2) ausrichten, und in letzterem eine heiße Zone (7) und eine kalte Zone (8) beidseitig von der Referenzachse definieren, Induzieren einer Oberflächenspannungsvariation der Grenzfläche (5) parallel zu der Referenzachse (3) und Inbewegungsetzen des inneren Mediums (4) gemäß einem geschlossenen Zwangsmikrokonvektions-Pfad (12), umfassend ein axiales Hinzirkulieren (12a) von der kalten Zone (8) zu der heißen Zone (7) und ein peripheres Rückzirkulieren (12b) von der heißen Zone zu der kalten Zone,
c) eine ausgehend von einem Substrat (10), auf dem ein für den Analyten (1) spezifisches Bindungsreagens (14) fixiert ist, erhaltene reaktionsfähige Oberfläche (9), wobei das Bindungsreagens auf diesem Substrat verteilt und fixiert ist; wobei die reaktionsfähige Oberfläche (9) in bezug auf Mittel (13) zur Bildung und/oder Aufrechterhaltung des Reaktionsgebildes (2) so liegt, daß sie auf dem Zwangsmikrokonvektions-Pfad (12) des inneren Mediums in Kontakt mit dem inneren Medium (4) steht, angeordnet ist.

16. Einrichtung nach Anspruch 15, **dadurch gekennzeichnet, daß** die Mittel (13) zur Bildung und/oder Aufrechterhaltung des Reaktionsgebildes (2) ein Mittel zum Suspendieren von letzterem umfassen, und zwar ausgewählt aus der Gruppe bestehend aus einem Röhrchen (16), zum Beispiel einem Kapillarröhrchen, dessen freies offenes Ende (16a) dergestalt ist, daß es das Reaktionsgebilde (2) bildet und suspendiert, einen Ring (21) und einen einfachen abgeschrägten gerillten Stiel (23).

17. Einrichtung nach Anspruch 16, **dadurch gekennzeichnet, daß** das Innere des Röhrchens (16) mit einer Schicht (17) eines hydrophilen Materials, die längenmäßig oder höhenmäßig am freien Ende (16a) begrenzt ist, beschichtet ist und gegebenenfalls eine Schicht eines hydrophoben Materials den Rest der inneren Oberfläche des Röhrchens (16) beschichtet.

18. Einrichtung nach einem der Ansprüche 15 bis 17, **dadurch gekennzeichnet, daß** die Mittel zur Erzeugung des thermischen Gradienten (66) Heizmittel (14), die mit dem inneren Medium (4) des Reaktionsgebildes von der Seite der heißen Zone (7) Wärme austauschen, und Kühlmittel (15), die mit dem inneren Medium (4) der Seite der kalten Zone (8) Kälte austauschen, umfassen.

19. Einrichtung nach Anspruch 18, **dadurch gekennzeichnet, daß** die Heizmittel (14) und/oder die Kühlmittel (15) ein metallisches Element (18) umfassen, das koaxial mit der Referenzachse (3) ausgerichtet ist und an einem Ende in das innere Medium (4) des Reaktionsgebildes (2) eintaucht und das am anderen Ende je nachdem mit einer Hitzequelle (19) bzw. mit einer Kältequelle (20) thermisch verbunden ist.

20. Einrichtung nach einem der Ansprüche 15 bis 19, **dadurch gekennzeichnet, daß** die Heizmittel (14) oder die Kühlmittel (15) von dem äußeren Medium gebildet werden.

21. Einrichtung nach einem der Ansprüche 15 bis 19, **dadurch gekennzeichnet, daß** die Heizmittel (14) oder die Kühlmittel (15) aus einem oder mehreren metallischen Elementen (18) bestehen.

22. Einrichtung nach einem der Ansprüche 15 bis 21, **dadurch gekennzeichnet, daß** ein Magnetelement so vorliegt, daß ein dauerhaftes oder vorübergehendes magnetisches Feld in dem inneren Medium (4) des Reaktionsgebildes (2) räumlich von der reaktionsfähigen Oberfläche (9) beabstandet vorliegt.

23. Einrichtung nach Anspruch 22, **dadurch gekennzeichnet, daß** das Magnetelement aus einem metallischen Element (18) besteht.

24. Einrichtung nach einem der Ansprüche 15 bis 23, **dadurch gekennzeichnet, daß** es sich bei dem äußeren Medium (6) um eine gasförmige oder flüssige Phase (24) handelt, die gegenüber dem internen Medium (4) inert ist und die in einer Begrenzungsausnehmung (24a) des Reaktionsvolumengebildes (2) angeordnet ist, dessen Referenzachse (3) zum Beispiel horizontal angeordnet ist.

25. Einrichtung nach Anspruch 24, **dadurch gekennzeichnet, daß** die Begrenzungsausnehmung (24a) eine abgeflachte oder plane Form aufweist.

26. Einrichtung nach einem der Ansprüche 18 bis 21, **dadurch gekennzeichnet, daß** die Kühlmittel (15) und/oder Heizmittel (14) thermisch, zum Beispiel leitfähig, mit der reaktionsfähigen Oberfläche (9) verbunden sind.

27. Einrichtung nach Anspruch 15, **dadurch gekennzeichnet, daß** sie ein Reaktionsorgan umfaßt, zum Beispiel einen Stiel (40), der an einem freien Ende die reaktionsfähige Oberfläche (9) umfaßt, die zwischen zwei Positionen, nämlich einer inaktiven Position, in der die reaktionsfähige Oberfläche (9) außerhalb des Reaktionsgebildes (2) verbleibt und einer aktiven Position, in der die reaktionsfähige Oberfläche (9) in das innere Medium eintaucht, verschiebbar ist, zum Beispiel entlang der Referenzachse (3).

28. Einrichtung nach Anspruch 15, **dadurch gekennzeichnet, daß** die Mittel (13) zur Bildung und/oder Aufrechterhaltung des Reaktionsgebildes (2) ein Stellmittel für letzteres ausgewählt aus der Gruppe bestehend aus einer hydrophilen Stelle (41) und/oder einer hydrophilen Zone (42) eines Trägers (43), die von einer hydrophoben Zone (44) umgeben ist, umfassen.

29. Einrichtung nach einem der Ansprüche 15 bis 27, **dadurch gekennzeichnet, daß** die reaktionsfähige Oberfläche (9) eine hydrodynamische Form aufweist.
